# EUROPEAN PATENT APPLICATION

(11) **EP 4 800 611 A1**
(43) Date of publication of application: **02.09.2026**
(21) Application number: 23956740.7
(22) Date of filing: 24.10.2023
(51) Int. Cl.: G06N 99/00

(54) **COMPUTATION PROGRAM, COMPUTATION METHOD, AND INFORMATION PROCESSING DEVICE**

(71) Applicant: FUJITSU LIMITED, Kawasaki-shi, Kanagawa 211-8588 (JP)
(72) Inventor: HASOME, Ayano, Kawasaki-shi, Kanagawa 211-8588 (JP); YAMAZAKI, Takashi, Kawasaki-shi, Kanagawa 211-8588 (JP)
(74) Representative: Haseltine Lake Kempner LLP
(86) International application number: PCT/JP2023/038289
(87) International publication number: WO 2025/088682

(57) **Abstract**

A calculation program causes a computer to execute a process including repeating a search process to find a solution for an optimization target, generate a plurality of solutions by varying the solution, and calculate an average value and a variance value of an objective function for the plurality of solutions, and outputting a combination satisfying a predetermined condition among combinations of the average value and the variance value obtained in each search process.

## Description

### TECHNICAL FIELD

The present invention relates to a calculation program, a calculation method, and an information processing device.

### BACKGROUND ART

In a variety of industries, optimization problems to achieve favorable results exist. Optimization algorithms for finding optimal solutions to these optimization problems are being researched (see, for example, Patent Documents 1 to 3).

### CITATION LIST

### PATENT DOCUMENT

PATENT DOCUMENT 1: Japanese Patent Application Publication No. 2008-159048
PATENT DOCUMENT 2: Japanese Patent Application Publication No. 2003-521773
PATENT DOCUMENT 1: US Patent Application Publication No. 2019/0272752

### SUMMARY OF THE INVENTION

### TECHNICAL PROBLEM

In optimization algorithms, it is conceivable to seek an exact solution. However, in actual practice, tasks may not be performed according to the exact solution, or physical properties may not be obtained according to the exact solution. In these cases, the benefits that would be obtained with the exact solution may be significantly reduced. Therefore, it is conceivable to search for a more robust solution. However, searching for a more robust solution may result in high computational costs.

In one aspect, the present invention aims to provide a calculation program, a calculation method, and an information processing device that can obtain a highly robust solution with low computational costs.

### SOLUTION TO PROBLEM

In one aspect, a calculation program causes a computer to execute a process including: repeating a search process to find a solution for an optimization target, generate a plurality of solutions by varying the solution, and calculate an average value and a variance value of an objective function for the plurality of solutions; and outputting a combination satisfying a predetermined condition among combinations of the average value and the variance value obtained in each search process.

### ADVANTAGEOUS EFFECTS OF INVENTION]

A highly robust solution can be obtained with low computational cost.

### BRIEF DESCRIPTION OF THE DRAWINGS

[FIG. 1] Provided is a diagram illustrating optimization results for product placement in a packaging box.
[FIG. 2] (a) is a functional block diagram of an overall configuration of an information processing device according to Embodiment 1, and (b) is a block diagram illustrating a hardware configuration of each part of the information processing device.
[FIG. 3] Provided is a flowchart of an example of an operation of an information processing device.
[FIG. 4] Provided is a diagram illustrating a transition of a solution search area.
[FIG. 5] Provided is a diagram illustrating a case where a genetic algorithm is used for an optimization engine.
[FIG. 6] Provided is a diagram illustrating average values and variance values.
[FIG. 7] Provided is a diagram illustrating average values and variance values.
[FIG. 8] Provided is a diagram illustrating a case where an explanatory variables is two-dimensional.
[FIG. 9] (a) is a diagram of search results of an optimization engine that does not take variance into account, and (b) is a diagram of search results of Embodiment.
[FIG. 10] Provided are results of evaluating robustness.
[FIG. 11] Provided is a diagram for explaining QUBO format.

### DESCRIPTION OF EMBODIMENTS

Prior to describing the embodiments, an overview of optimization algorithms will be provided.

Optimization problems exist in a variety of industries, including the distribution and manufacturing industries. Research is being conducted into optimization algorithms that seek exact solutions to these problems that achieve the highest computational effectiveness.

Here, an exact solution is a solution that maximizes the evaluation index. For example, in a production line, the evaluation index is such as production completion time, delivery date, or production cost. In a packing operation, the evaluation index is such as the amount of wasted materials or work time. An optimization algorithm uses one or more evaluation indexes as an objective function and performs optimization to improve the objective function. Note that in a production line, input variables are such as the initial product introduction order on the production line, as well as conditions such as the work time required for each product. In a packing operation, input variables are such as the initial packing order of products, as well as conditions such as the size, weight, and box size of each product. The resulting solution is the order in which products are introduced onto the production line. In a packing operation, the resulting solution may be the order in which products should be packed.

Optimization algorithms can obtain the exact solution that maximizes the evaluation index. However, when attempting to actually apply the exact solution obtained by these optimization algorithms, various real-world variations can occur, making it difficult to perform the operation exactly as the exact solution. Or, the physical properties may not be obtained exactly as the exact solution, resulting in a slight deviation from the exact solution.

The exact solutions obtained using conventional methods are often solutions that achieve high local effectiveness. Therefore, if the work content or physical properties deviate from the exact solution (for example, tolerances arise), the effectiveness may decrease dramatically, and the expected results may not be achieved. Furthermore, even if the work content matches the exact solution, it is possible that the expected results may not actually be achieved because on-site variables are not taken into account.

For example, in packing work, differences in worker proficiency may increase the time required for the work, or size errors in the products handled may prevent the packing work from being completed according to the exact solution. These are all possible occurrences in actual work sites. If these events occur, the work content will deviate from the exact solution.

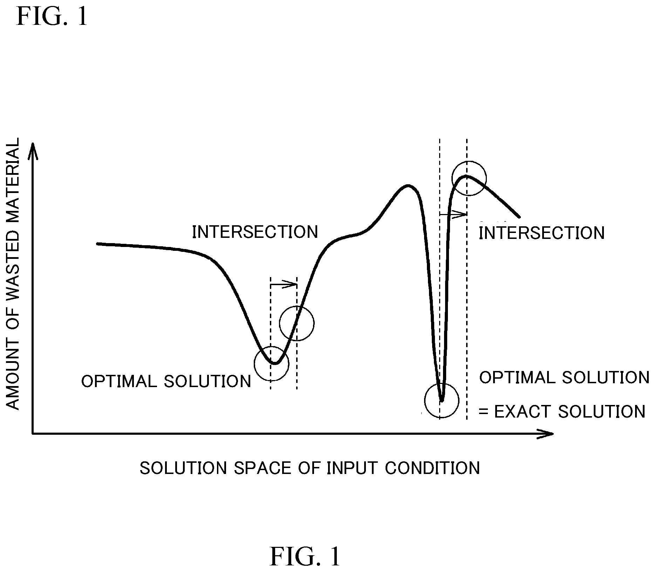

FIG. 1 illustrates an optimization result for product placement in packaging boxes. Packing products tightly into packaging boxes can reduce wasteful materials. Therefore, it is possible to use an optimization algorithm to find the optimal solution for packing products into packaging boxes. FIG. 1 is a diagram illustrating an optimal solution. In FIG. 1, the horizontal axis represents the solution space for input conditions, and the vertical axis represents the amount of wasted materials. In the example in FIG. 1, evaluation is performed using a single evaluation index: the amount of wasted materials.

For example, the optimal solution on the right side of FIG. 1 is the exact solution because it minimizes the amount of wasted materials. While this exact solution significantly reduces the amount of wasted materials, because the solution exists locally, even a slight deviation from the exact solution can significantly increase the amount of wasted materials. This is because the width of the valley near the exact solution in the horizontal direction on the graph in FIG. 1 is small. On the other hand, the optimal solution on the left does not reduce the amount of wasted materials as much as the exact solution, but compared to the exact solution, the solution does not exist locally (the difference in the amount of wasted materials with neighboring solutions is small). In other words, in the graph in FIG. 1, the width of the valley near the optimal solution on the left side along the horizontal axis is larger than the width of the valley near the optimal solution (exact solution) on the right side. Therefore, even if the work content deviates slightly from the optimal solution, the amount of wasted material does not increase significantly. In actual work sites, a highly robust optimization algorithm is required that can achieve results close to the optimal solution, even when the work content deviates from the optimal solution.

Here, the MORDO (multi-objective robust design optimization) method is one example of a robust optimization method. This method repeatedly samples the design variables being searched during the optimization calculation, and evaluates the resulting indices through statistical processing. The average value and the standard deviation of the objective function are used as evaluation values, and the solution with the highest evaluation value is finally calculated as the optimal solution. The MORDO method repeatedly evaluates a sufficient number of sampling points near the input variables, resulting in a highly robust solution. However, calculation time monotonically increases as the number of sampling points increases. Therefore, in optimization problems where the cost of calculating a single evaluation value is high, it is difficult to obtain an optimal solution using the MORDO method within a practical calculation time.

To overcome the problem of computation time, the Robust GA (robust genetic algorithm) may be used as another highly robust optimization method. The Robust GA method uses a GA (genetic algorithm) as an optimization engine, generating variance for each evaluation of the generational evolution using the genetic algorithm to perform generational evolution. Alternatively, a hybrid method combining the MORDO method and the Robust GA method may be considered. Another possible method is the Robust CMA-ES method. These are robust optimization methods that minimize multiple sampling and reduce computational load. However, a drawback is that the need to use GA or CMA-ES limits the optimization engines that can be used. Currently, the MORDO method is the only robust optimization technique that can be widely applied to various optimization engines.

The following example describes robust optimization that can be applied to a wide range of optimization engines and can obtain highly robust solutions with low computational cost.

### [Embodiment 1]

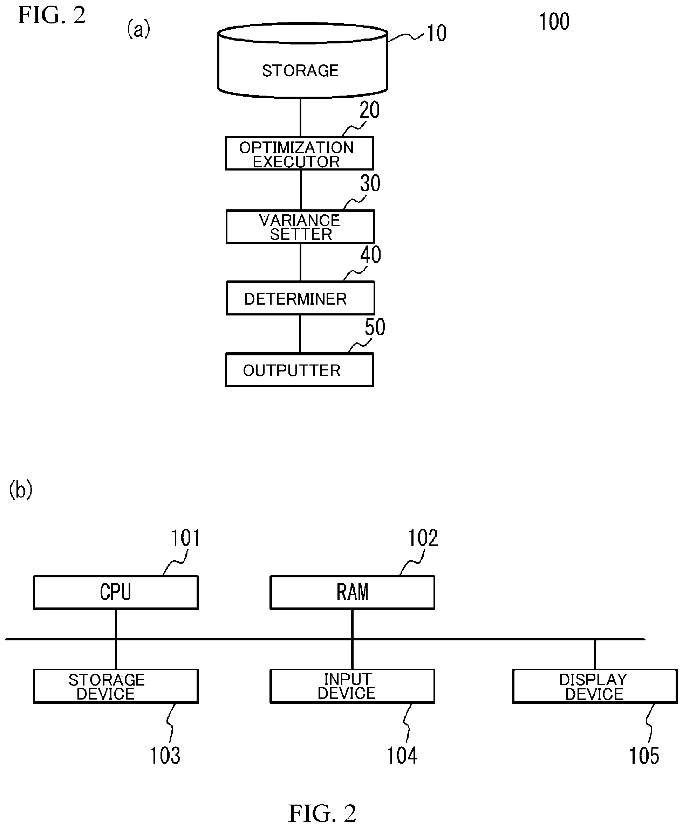

FIG. 2(a) is a functional block diagram illustrating the overall configuration of an information processing device 100 according to the embodiment 1. The information processing device 100 is, for example, a server for optimization processing. As illustrated in FIG. 2(a), the information processing device 100 includes a storage 10, an optimization executor 20, a variance setter 30, a determiner 40, an outputter 50 and so on.

FIG. 2(b) is a block diagram illustrating the hardware configuration of each unit of the information processing device 100. As illustrated in FIG. 2(b), the information processing device 100 includes a CPU 101, a RAM 102, a storage device 103, an input device 104, a display device 105, and the like.

The CPU (Central Processing Unit) 101 is a central processing unit. The CPU 101 includes one or more cores. The RAM (Random Access Memory) 102 is a volatile memory that temporarily stores programs executed by the CPU 101 and data processed by the CPU 101. The storage device 103 is a non-volatile storage device. The storage device 103 us such as a ROM (Read Only Memory), a solid-state drive (SSD) such as a flash memory, or a hard disk driven by a hard disk drive. The storage device 103 stores a calculation program. The input device 104 is an input device such as a mouse or keyboard. Alternatively, the input device 104 is an interface for an external memory such as a USB memory. The display device 105 is a device that displays the processing results of the information processing device 100, such as a display. Each unit of the information processing device 100 is realized by the CPU 101 executing the calculation program. It should be noted that each unit of the information processing device 100 may be implemented using hardware such as a dedicated circuit.

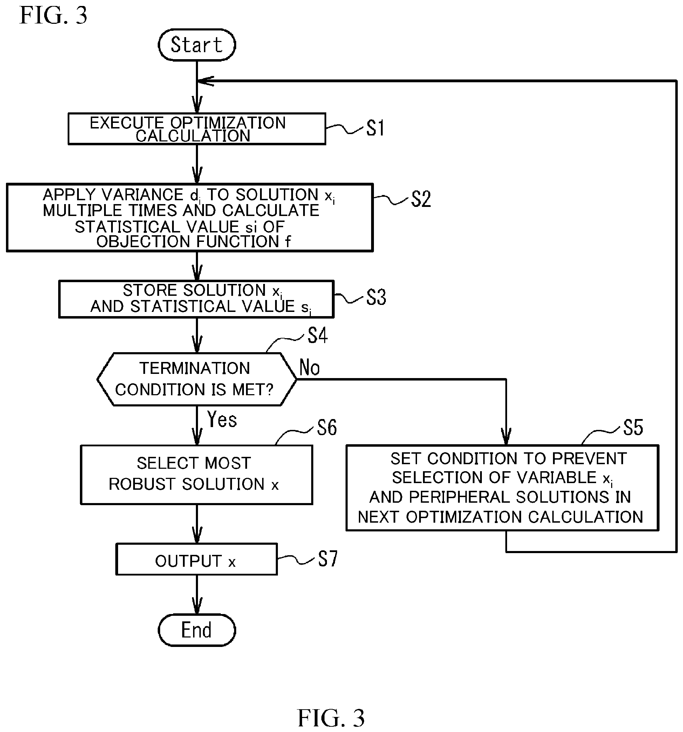

FIG. 3 is a flowchart illustrating an example of the operation of the information processing device 100. Below, an example of the operation of the information processing device 100 will be described in accordance with the flowchart in FIG. 3.

First, the optimization executor 20 references the optimization problem stored in the storage 10 and performs an optimization calculation (step S1). In this case, the variable element is x, and the objective function is f(x). In the optimization calculation, a solution x is searched for so that f(x) satisfies a predetermined condition. In this embodiment, as an example, a solution x that minimizes f(x) is searched for.

Next, the variance setter 30 applies variance dᵢ multiple times to the optimal solution xᵢ obtained in step S1 and calculates the statistical value sᵢ of the objective function f (step S2). For example, the variance setter 30 applies multiple types of variance to the solution xᵢ, following a Gaussian distribution with an average value of 0 and a standard deviation of σ. The average value and variance of the objective function f are used as the statistical value sᵢ. In optimization that minimizes the objective function f, a smaller average value of the objective function f indicates a better solution xᵢ. A smaller variance of the objective function f indicates higher robustness, while a larger variance of the objective function f indicates lower robustness. Note that "i" refers to the number of times step S2 is executed. Therefore, when step S2 is executed for the first time, xᵢ is x₁.

Next, the storage 10 associates the solution xᵢ with the statistical value sᵢ and stores them (step S3).

Next, the determiner 40 determines whether the termination condition is met (step S4). For example, the determiner 40 determines whether the number of times step S4 has been executed has reached a specified value.

If the determination in step S4 is "No," the optimization executor 20 sets a condition to prevent the selection of variable xᵢ and its peripheral solutions during the next optimization calculation (step S5). For example, the optimization executor 20 imposes a penalty within the range of x±Δx. For example, the optimization executor 20 adds a sufficiently large value M as a penalty to the range f(x-Δx) to f(x+Δx) for the solution xᵢ. Here, Δx reflects the magnitude of the robustness R of the solution x. A smaller robustness R indicates higher robustness. For example, the robustness R may be the inverse of the variance of the statistical value sᵢ. For example, Δx₁ is set as σ for the robustness index R₁ of the initial solution x₁, and the penalty width Δxₙ to be given to the solution xₙ obtained thereafter is set to a smaller value with respect to R₁ as the solution becomes more robust. For example, Δxₙ = σ × (Rₙ/R₁). Here, σ may be the same value as σ in step S2. Then, the process is executed again from step S1.

If step S4 returns "Yes," the optimization executor 20 selects the most robust solution x from among the solutions x stored in the storage 10 (step S6). That is, the solution x with the lowest variance of the objective function f is selected. For example, the selection criteria for solution x may take into account not only robustness (the variance index) but also a preset performance threshold (the mean index). For example, a solution x with a variance lower than the variance threshold and an average value lower than the average value threshold may be selected. In this case, the thresholds are set before the optimization calculation is performed.

Next, the outputter 50 outputs the solution x selected in step S6 as the optimal solution x (step S7). The information output by the outputter 50 may be displayed on the display device 105.

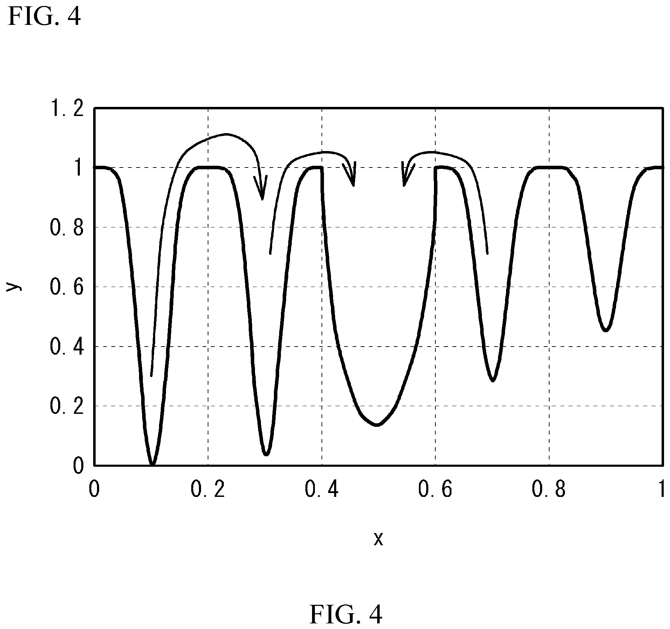

According to this embodiment, robustness is evaluated for the solutions calculated in the optimization calculation, and a penalty is imposed to prevent solutions near the evaluated solution from being selected as solutions in the next optimization calculation. This allows the search area to be enlarged. In this case, by reflecting the robustness of the obtained solution in the likelihood of selecting the solution, the search becomes less likely to find solutions near previously found solutions with low robustness, allowing for an efficient search for robust solutions. FIG. 4 illustrates the transition of the solution search area. In FIG. 4, the vertical axis y represents the objective function f(x), and the horizontal axis represents the variable x. As illustrated in FIG. 4, even if there are multiple valleys that could be searched for as solutions, the search area transitions sequentially through each valley, resulting in the search for a more robust solution.

As described above, this embodiment does not limit the optimization engine that can be used. Therefore, regardless of the type of optimization engine, by reflecting the robustness of previously found solutions in the search area, it is possible to efficiently search for a highly robust solution over a wide area.

As an example of optimization calculation, the genetic algorithm (GA) will be described. In the GA, robustness is evaluated at the end of each generation of evolution, and the neighborhood of the evaluated individual is not selected as a parent.

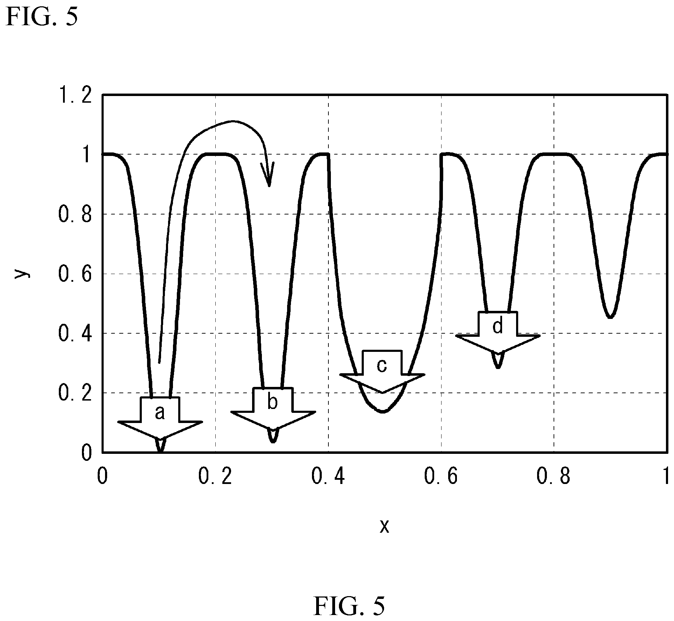

First, in the first generation, as shown in FIG. 5, a solution in the valley area of (a) is assumed to be obtained. Using the solution of (a), the average value and the variance of the objective function are calculated and robustness is evaluated. A sufficiently large value is assigned to the Pareto ranking of the neighborhood of the solution of (a).

As a result, the neighboring solutions for (a) are no longer selected as parents, and a solution in an area other than (a) (area (b) in FIG. 5) is obtained. Robustness is evaluated using the solution for the area (b). The robustness of (b) is compared with the robustness of (a). A sufficiently large value is assigned to the Pareto ranking of the neighborhood of the solution for (b). Note that the value assigned is smaller than that for (a) if the robustness of (b) is higher than that of (a), and larger than that for (a) if the robustness of (b) is smaller than that of (a).

By repeating subsequent generations in the same way, the most robust solution is calculated while repeating the generational evolution. For example, in the example of FIG. 5, solutions are searched for in the order of the area (a), the area (b), the area (c), and the area (d). In this way, when GA is used as the optimization engine in this embodiment, the number of robustness evaluations is at most the number of generations, reducing computational costs.

Here, the maximization problem of equation f_{b}(x), which is the standard problem of equation (1) below, is treated as a minimization problem, and the minimization problem of equation (2) below is solved.
[Equation 1] ${f}_{b} \left(x\right) = \left\{\begin{matrix}{e}^{- 2 ln 2 {\left(\frac{x - 0.1}{0.8}\right)}^{2}} {\left|sin\left(5πx\right)\right|}^{0.5} : & 0.4 < x \leq 0.6 \\ {e}^{- 2 ln 2 {\left(\frac{x - 0.1}{0.8}\right)}^{2}} {sin}^{6} \left(5πx\right) : & otherwise .\end{matrix}\right.$ [Equation 2] ${f}_{b}^{′} \left(x\right) = 1 - {f}_{b} \left(x\right)$

The GA was used as the optimization engine. The number of evolutionary generations in the GA is 20. The number of individuals is 100. Robustness is evaluated once every two generations. The evaluation method involves applying 10 Gaussian variance with an average value of 0 and a variance of 0.065 to the obtained solutions, and calculating the average value and variance of the obtained objective function f'_{b}.

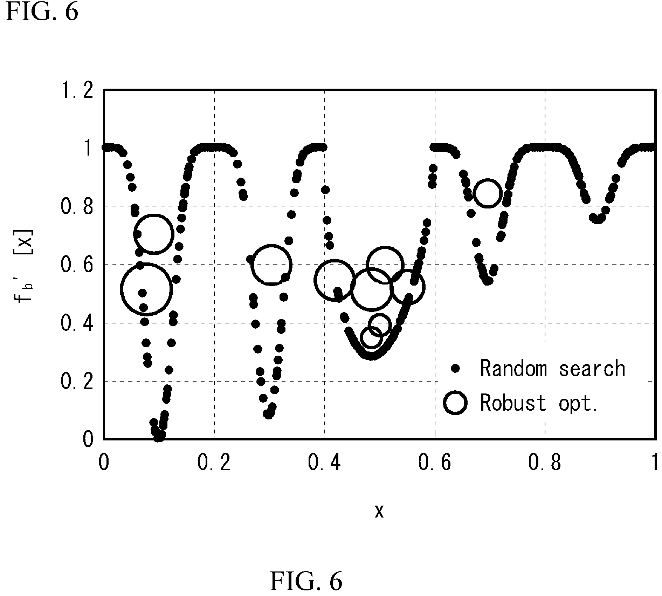

In FIG. 6, the Random Search plot represents the solution space. The center of the Robust opt. bubble (circle) represents the mean robustness evaluation value, and the bubble size represents the standard deviation (the square root of the variance). As illustrated in FIG. 6, robust evaluation is confirmed in four of the five valleys. It can be seen that the search area for a solution is not limited to the left valley where an exact solution exists, but also included other valleys. This embodiment demonstrates that a highly robust solution (the solution with the smallest bubble size located in the central valley) is obtained.

Next, it is verified whether a robust solution can be obtained even when the highly robust solution is the shallowest valley. The problem of Equation (3) below is targeted for optimization, and the minimization problem of Equation (4) below is solved.
[Equation 3] ${f}_{c} \left(x\right) = \left\{\begin{matrix}0.2 {e}^{- 2 ln 2 {\left(\frac{x - 0.1}{0.8}\right)}^{2}} {\left|sin\left(5πx\right)\right|}^{0.5} : & 0.4 < x \leq 0.6 \\ {e}^{- 2 ln 2 {\left(\frac{x - 0.1}{0.8}\right)}^{2}} {sin}^{6} \left(5πx\right) : & otherwise .\end{matrix}\right.$ [Equation 4] ${f}_{c}^{′} \left(x\right) = 1 - {f}_{c} \left(x\right)$

The GA is used as the optimization engine. The number of evolutionary generations in the GA is 20. The number of individuals is 100. Robustness is evaluated once every two generations. The evaluation method involves applying a Gaussian distribution with an average value of 0 and a variance of 0.065 to the obtained solution 10 times, and calculating the average value and the variance of the obtained objective function f'_{b}. In other words, the same conditions as in FIG. 6 were used.

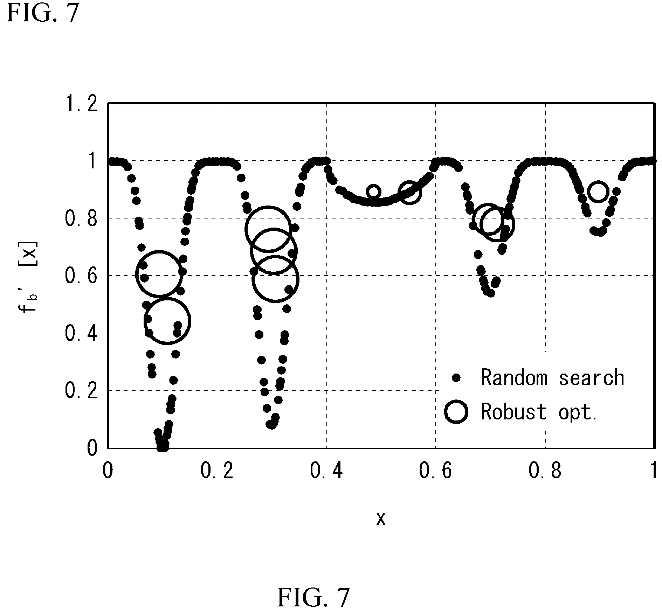

In FIG. 7, the Random Search plot represents the solution space. The center of the Robust opt. bubble represents the mean robustness evaluation value, and the bubble size represents the standard deviation (the square root of the variance). As illustrated in FIG. 7, robust evaluation is confirmed in four of the five valleys. It can be seen that the solution search area is not limited to the left valley where the exact solution exists, but also includes other valleys. This embodiment demonstrates that a robust solution is found regardless of the size of the valley where a highly robust solution exists.

Next, the computational costs of this embodiment is compared with those of the MORDO method under the conditions illustrated in FIG. 6 and FIG. 7. With MORDO, 100 individuals × 10 times/individual × 20 generations = 20,000 calculations are performed. In contrast, with this embodiment, (100 individuals × 2 generations + 10 times) × 20 generations/(2 generations/solution) = 2,100 calculations are performed. As such, this embodiment demonstrates that the computational cost for robust optimization can be reduced by approximately 90% compared to the MORDO method.

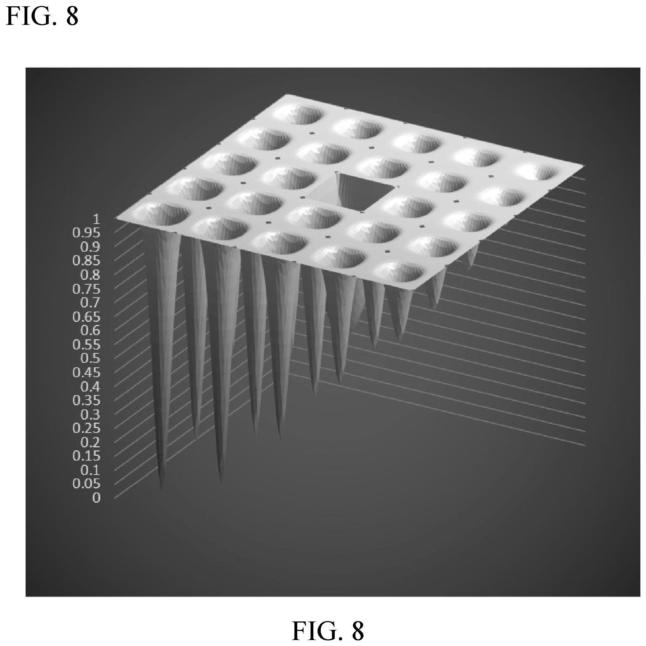

Next, the case where the explanatory variables are two-dimensional is examined. To expand f_{b}(x), described in Equation (1), to two dimensions, the conditions in Equations (5) and (6) are added. Equation (5) below may be expressed as illustrated in FIG. 8. To treat this as a minimization problem, similar to a one-dimensional problem, f_{b}2'(x) in Equation (6) is used.
[Equation 5] ${f}_{b 2} \left(x, y\right) = {f}_{b} \left(x\right) ⋅ {f}_{b} \left(y\right)$ [Equation 6] ${f}_{b 2} ′ \left(x, y\right) = 1 - {f}_{b 2} \left(x, y\right)$

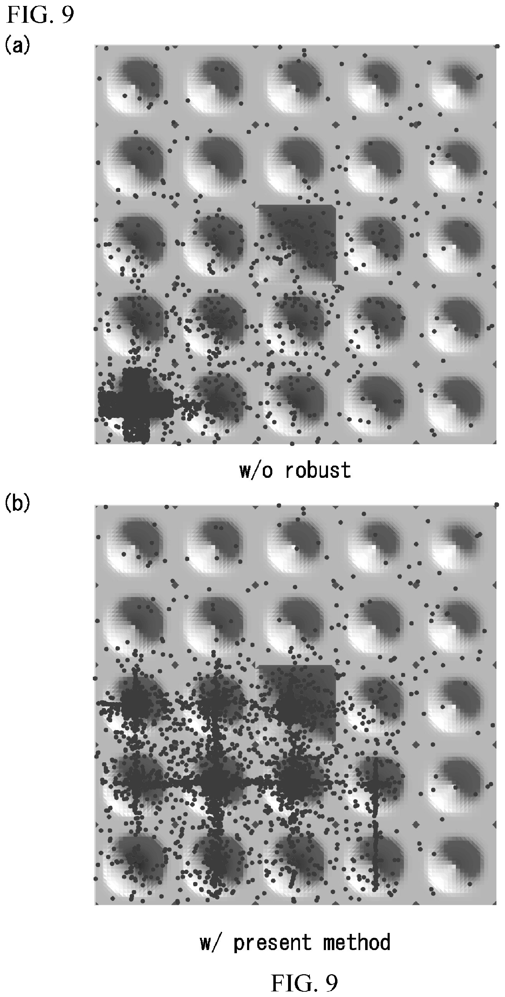

FIG. 9(a) illustrates the search results of an optimization engine that does not consider variance. FIG. 9(b) illustrates the search results of this embodiment. The search results in FIG. 9(a) indicate that search positions are concentrated near the optimal solution. In contrast, the search results in FIG. 9(b) indicate that transitions to other search solutions are progressing.

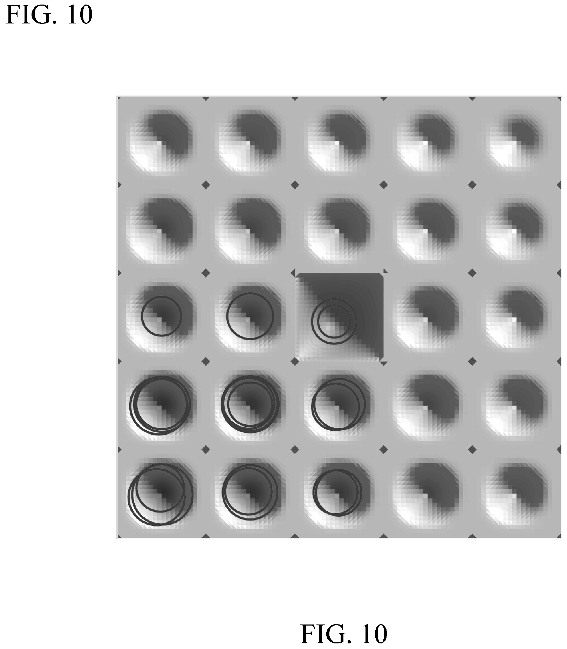

FIG. 10 illustrates the results of a robustness evaluation. The bubble chart illustrates the standard deviation as the bubble size. The number of evolutionary generations is 40, the number of individuals is 200, and robustness evaluations are performed 20 times every two generations, with 10 Monte Carlo evaluations. The robustness check is performed at a position that performs better under static conditions than the robust solution, and it can be seen that a highly robust solution is ultimately obtained.

Note that the format of the above optimization problem is not particularly limited, but a QUBO format, for example, may be adopted. The QUBO format stands for Quadratic Unconstrained Binary Optimization, a format that allows binary optimization without quadratic constraints. The QUBO format may be expressed, for example, as the following equation. Note that xᵢ = 0 or 1 (i = 1, ..., N). Wᵢⱼ is the coupling coefficient between xᵢ and xⱼ. bᵢ is the bias coefficient for xᵢ. The first term on the right-hand side is a quadratic term representing the interaction. The second term on the right-hand side is a linear term representing the bias effect. The third term on the right-hand side is a constant term.$E \left(x\right) = - {\sum }_{i , j} {W}_{ij} {x}_{i} {x}_{j} - {\sum }_{i} {b}_{i} {x}_{i} + const .$

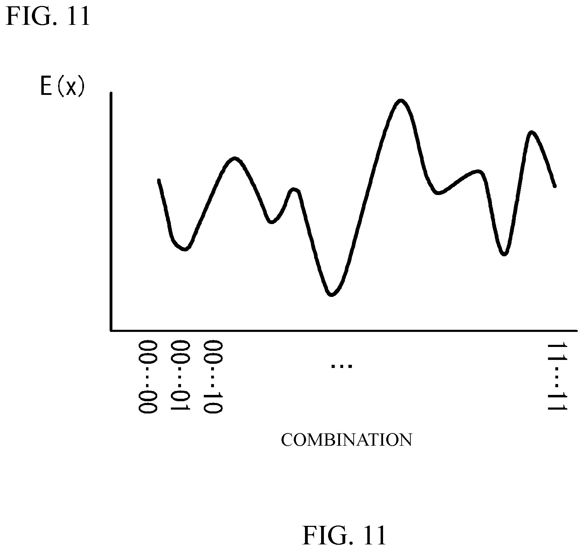

In the QUBO format, a solution is searched for according to the above equation. For example, if the optimal solution is one where E(x) is minimized, a good solution x that minimizes E(x) is searched for, as illustrated in FIG. 11. For example, E(x) is calculated for an initial value of x, then E(x) is calculated by changing the value of x, then E(x) is calculated by changing the value of x again, and this process is repeated. The x obtained when the smallest E(x) among the E(x) calculation results is the solution.

In each of the above examples, the optimization executor 20 is an example of an executor that repeatedly executes a search process in which it searches for a solution to the optimization target, generates multiple solutions by adding variance to the obtained solutions, and calculates the average value and variance of the objective function for the multiple solutions. The outputter 50 is an example of an outputter that outputs combinations of the average value and variance obtained in each search process that satisfy a predetermined condition.

The above-described embodiment is a preferred example of the present invention. However, the present disclosure is not limited to this, and various modifications can be made without departing from the scope of the present invention.

### Description of Symbols

- 10: Storage
- 20: Optimization executor
- 30: Variance setter
- 40: Determiner
- 50: Outputter
- 100: Information processing device
- 105: Display device

## Claims

1. A calculation program **characterized by** causing a computer to execute a process including:
repeating a search process to find a solution for an optimization target, generate a plurality of solutions by varying the solution, and calculate an average value and a variance value of an objective function for the plurality of solutions; and
outputting a combination satisfying a predetermined condition among combinations of the average value and the variance value obtained in each search process.

2. The calculation program as claimed in claim 1, **characterized in that**
when repeating the search process, a predetermined range in a solution space that includes a solution that has already been obtained is excluded from a search range.

3. The calculation program as claimed in claim 2, **characterized in that** the computer is caused to execute:
narrowing the predetermined range as the variance value of the objective function for the plurality of solutions for the solution obtained in the solution space decreases, and widening the predetermined range as the variance value of the objective function for the plurality of solutions for the solution obtained it the solution space increases.

4. The calculation program as claimed in claim 1, **characterized in that**
a genetic algorithm is used as an optimization engine for the search process; and
the computer is caused to execute:
if the variance value of the objective function for the plurality of solutions for a first solution obtained in a previous search process is smaller than the variance value of the objective function for the plurality of solutions for a second solution obtained in a next search process, making a Pareto ranking of the second solution larger than the Pareto ranking of the first solution, and if the variance value of the objective function for the plurality of solutions for the first solution is larger than the variance value of the objective function for the plurality of solutions for the second solution, making the Pareto ranking of the second solution smaller than the Pareto ranking of the first solution.

5. The calculation program as claimed in claim 1, **characterized in that**
the variance follows a Gaussian distribution.

6. The calculation program as claimed in claim 1, **characterized in that**
the optimization target is expressed in QUBO format.

7. The calculation program as claimed in claim 1, **characterized in that** the computer is caused to execute:
among the combinations of the average value and the variance value obtained in each search process, displaying a combination that satisfies a predetermined condition on a display device.

8. A calculation method **characterized in that** a computer executes a process including:
repeating a search process to find a solution for an optimization target, generate a plurality of solutions by varying the solution, and calculate an average value and a variance value of an objective function for the plurality of solutions; and
outputting a combination satisfying a predetermined condition among combinations of the average value and the variance value obtained in each search process.

9. The calculation method as claimed in claim 8, **characterized in that**
when repeating the search process, a predetermined range in a solution space that includes a solution that has already been obtained is excluded from a search range.

10. The calculation method as claimed in claim 9, **characterized in that** the computer executes:
narrowing the predetermined range as the variance value of the objective function for the plurality of solutions for the solution obtained in the solution space decreases, and widening the predetermined range as the variance value of the objective function for the plurality of solutions for the solution obtained it the solution space increases.

11. The calculation method as claimed in claim 8, **characterized in that**
a genetic algorithm is used as an optimization engine for the search process; and
the computer is caused to execute:
if the variance value of the objective function for the plurality of solutions for a first solution obtained in a previous search process is smaller than the variance value of the objective function for the plurality of solutions for a second solution obtained in a next search process, making a Pareto ranking of the second solution larger than the Pareto ranking of the first solution, and if the variance value of the objective function for the plurality of solutions for the first solution is larger than the variance value of the objective function for the plurality of solutions for the second solution, making the Pareto ranking of the second solution smaller than the Pareto ranking of the first solution.

12. The calculation method as claimed in claim 9, **characterized in that**
the variance follows a Gaussian distribution.

13. The calculation method as claimed in claim 9, **characterized in that**
the optimization target is expressed in QUBO format.

14. The calculation method as claimed in claim 9, **characterized in that** the computer is caused to execute:
among the combinations of the average value and the variance value obtained in each search process, displaying a combination that satisfies a predetermined condition on a display device.

15. An information processing device **characterized by** comprising:
an executor that repeats a search process to find a solution for an optimization target, generate a plurality of solutions by varying the solution, and calculate an average value and a variance value of an objective function for the plurality of solutions; and
an outputter that outputs a combination satisfying a predetermined condition among combinations of the average value and the variance value obtained in each search process.

16. The information processing device as claimed in claim 15, **characterized in that**
the executor excludes a predetermined range in a solution space that includes a solution that has already been obtained, from a search range, when repeating the search process.

17. The information processing device as claimed in claim 16, **characterized in that**
the executor narrows the predetermined range as the variance value of the objective function for the plurality of solutions for the solution obtained in the solution space decreases, and widens the predetermined range as the variance value of the objective function for the plurality of solutions for the solution obtained it the solution space increases.

18. The information processing device as claimed in claim 16, **characterized in that**
a genetic algorithm is used as an optimization engine for the search process; and
the executor, if the variance value of the objective function for the plurality of solutions for a first solution obtained in a previous search process is smaller than the variance value of the objective function for the plurality of solutions for a second solution obtained in a next search process, makes a Pareto ranking of the second solution larger than the Pareto ranking of the first solution, and if the variance value of the objective function for the plurality of solutions for the first solution is larger than the variance value of the objective function for the plurality of solutions for the second solution, makes the Pareto ranking of the second solution smaller than the Pareto ranking of the first solution.

19. The information processing device as claimed in claim 16, **characterized in that**
the variance follows a Gaussian distribution.

20. The information processing device as claimed in claim 16, **characterized in that**
the optimization target is expressed in QUBO format.
